# EUROPEAN PATENT SPECIFICATION

(11) **EP 2 003 039 B1**
(45) Date of publication and mention of the grant of the patent: **02.03.2011**
(21) Application number: 08010011.8
(22) Date of filing: 02.06.2008
(51) Int. Cl.: B62B 5/02

(54) **Trolley for ascending/descending stairs**
Wagen zum Treppensteigen
Chariot pour monter/descendre des escaliers

(30) Priority: 12.06.2007 IT UD20070107
(43) Date of publication of application: 17.12.2008
(73) Proprietor: Liva, Alan, 33090 Sequals (PN) (IT)
(72) Inventor: Liva, Alan, 33090 Sequals (PN) (IT)

(56) References cited:
- DE-A1- 1 505 834
- DE-A1- 2 408 954
- GB-A- 1 117 175

## Description

### Subject

The present invention concerns a trolley for ascending/descending stairs, featuring characteristics that are in accordance with the pre-characterising part of the main claim.
The field of application is basically aimed at the implementation of a trolley that is/can be powered, designed to go up and down stairs to transport objects, materials or whatever else is desired.

### State of the art

Trolleys for ascending/descending stairs are well-known.
Generally, they are equipped with electric drive and include various devices suitable for ascending and descending stairs.

DE 1505834 discloses a trolley with all the features of the preamble of claim 1.

### Problems and inconveniences related to the state of the art.

The problems and inconveniences related to the state of the art are basically the following:
- constraint of the motor drive;
- complexity of engaging the stairs to ascend and descend.

### Aim of the invention.

The aim of the invention consists in solving the above mentioned problems and inconveniences and, furthermore, without involving additional expenses and without compromising reliability:
- improving functionality and performances;
- simplifying the construction system;
- motorising the trolley with an independent drive system.
Solution of the problem and identification of inventive characteristics
The problem is solved thanks to the features of the main claim.
The sub claims represent desirable advantageous solutions that offer better functionality.

### Advantages

The following advantages are obtained:
- improving functionality and performances;
- simplifying the construction system;
- Having a lighter and more functional trolley equipped with an independent drive system that may consist of any electrical tool such as a drill or similar device, considering that, for example, these tools can operate both through direct electrical connection and by means of batteries.

### Description of the desirable solution

For a better understanding, the invention is described as the desirable solution with the help of the attached figures, where:

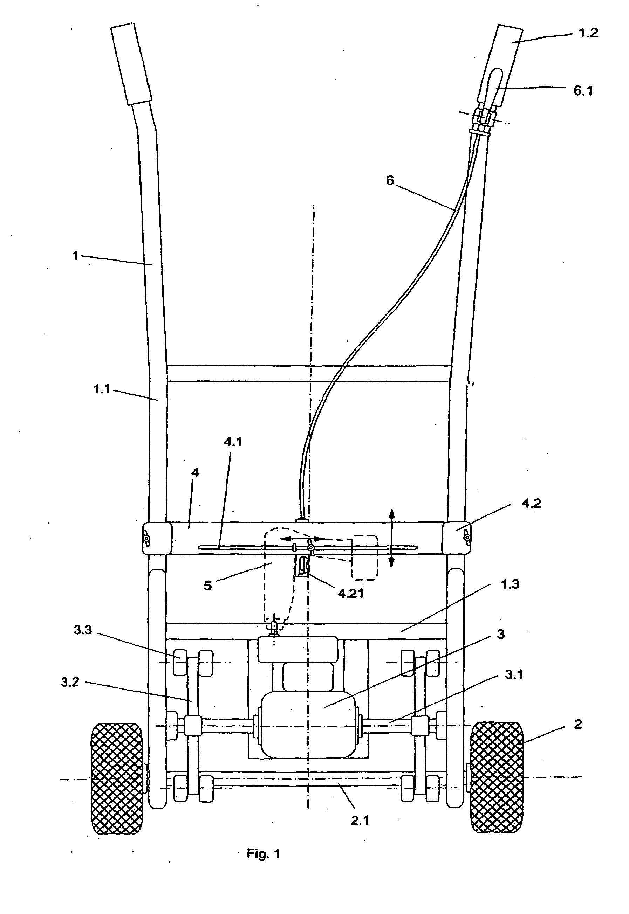

- Fig. 1. - shows the schematic view of the trolley (front view).
- Fig. 2. - shows the schematic view of the side, representing the ascending and descending motion on stairs.

### Detailed description of the invention in relation to figures.

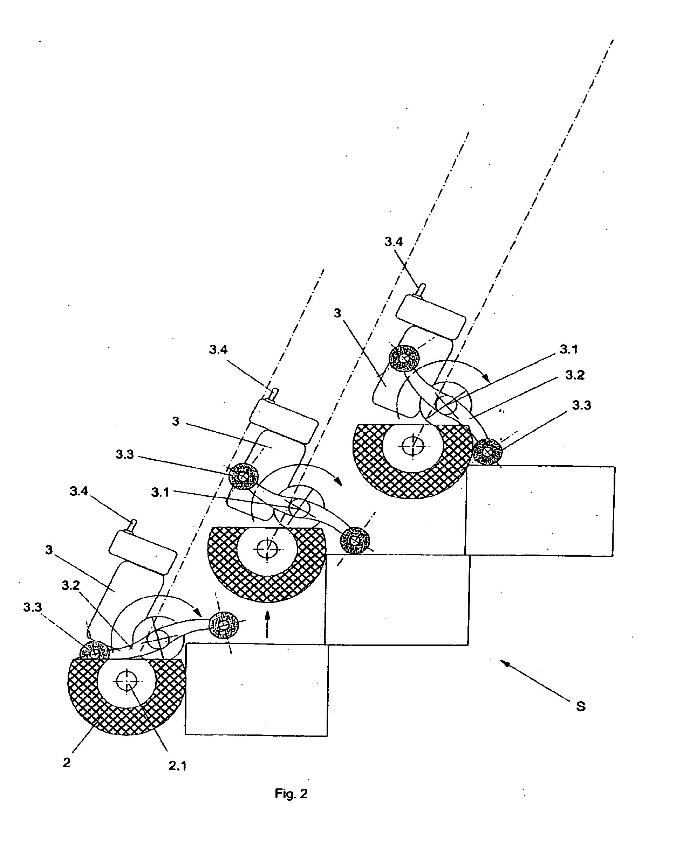

In accordance with the figures, it can be noticed that the invention refers to a sliding trolley for stairs with independent drive, equipped with an axle with "crank arm", off-axis with respect to the wheels and parallel to the same. The crank arm ends rotate and engage on the steps to ascend and descend.
In particular, number 1 shows the trolley arms with the associated control handles (1.2).
The control arms extend to form a trolley bearing structure (1.1, 1.3).
The trolley is equipped with conventional idle wheels (2).
Above the wheel axle (2.1) is an additional axle (3.1). It consists of two pairs of opposing crank arms (3.2) equipped with small end wheels (3.3) instead of the pedals of a traditional bicycle, but operating in the opposite direction; they are not used as a foot rest but as a support on the adjacent step. The crank arm axle is fitted with a reduction gear (3), with the top part ending with a coupling (3.4) to allow connecting the drive of a drill or similar device (5), by means of a bracket equipped with an adjustable fixing slot (4.21) for connecting the associated trigger as well. The above system is supported by an adjustable transversal arm (4) by means of sliding and locking sleeves (4.2) to remove and approach the drill (5) from/to the associated coupling (3.4).
Moreover, the above transversal arm (4) consists of a longitudinal slot (4.1) that allows the drill (5) to be shifting into a suitable position and locked in place. This means that any type of drill or similar electric tool can be mounted and rotated.
A flexible drive cable (6) with sheath is envisaged from transversal arm (4) to one of the trolley handles (1.2). Here a lever (6.1) connects to the cable (6) to drive the drill trigger, which is engaged at the end of it in the bracket (4.21).
In this way, the drill (5) trigger can be driven from the handle of one of the trolley arms (1), so that the operator does not need to move his/her hands away from the trolley handles.
The ascending/descending mechanism of the trolley is explained in more detail in the phases outlined in **Fig. 2****.**
The crank arm axle drive obliges the opposing crank arms to rotate exactly contrary to a bicycle, engaging the next step with its roller ends, thereby lifting the trolley when ascending or lowering it when descending.
The larger wheels that shift the trolley help to control the movement so as to turn upon the top of the step.
The execution details can change without deviating from the scope of the invention.

## Claims

1. Stair ascending/descending trolley consisting of a frame with a pair of trolley arms (1), trolley handles (1.2) and idle wheels (2) **characterised by** the fact that:
- they consist of a second axle (3.1) parallel to the travelling wheel axle (2.1) and basically consisting of two pairs of opposing arms (3.2) substantially resembling a pair of crank arms;
- the crank arm axle (3.1) provides reduction gear (3);
- the ends of the crank arms (3.2) are intended to engage into a step (S) adjacent to the wheels (2) as they turn;

2. Trolley according to claim 1, **characterised by** the fact that the reduction gear (3) of the crank arm axle (3.1) is arranged so that an electric tool (5) can be fitted by means of a removable coupling (3.4).

3. Trolley according to claims 1 and/or 2, **characterised by** the fact that the ends of the crank arms (3.2) are fitted with small wheely (3.3);

4. Trolley according to claim 3, **characterised by** the fact that the small end wheels (3.3) of the crank arms (3.2) are opposed;

5. Trolley according to any one of the previous claims, **characterised by** the fact that the crank arms (3.2) form two pairs of extending arms radially opposed, the same and symmetrical located on either sides of the trolley to give stability;

6. Trolley according to any one of the previous claims, **characterised by** the fact that it consists of supporting and coupling means for mounting and dismantling an electric tool able to provide a means of rotation (5) and coupling of such rotating means to the reduction gear (3), considering that there is also a drive connection and control of such rotating means of the tool conveying it to one of the trolley handles (6, 6.1);

7. Trolley according to claim (6), **characterised by** the fact that the means of connection of the tool rotating drive to the trolley handle is flexible (6);

8. Trolley according to any one of previous claims 6-7, **characterised by** the fact that the supporting and coupling means are adjustable and can be locked in position (4) (4.1, 4.2, 4.21);

9. Trolley according to the previous claim, **characterised by** the fact that such supporting and coupling means consist of a transversal bar (4) with sliding sleeves (4.2) that can be locked along the pair of trolley arms (1.1);

10. Trolley according to the previous claim, **characterised by** the fact that the transversal bar (4) has a longitudinal slot for transversal movement (4.1) of a tool (5) coupling means and slot adjustable coupling means (4.21) to lock the tool (5) drive trigger for return of the flexible cable (6) to a lever (6.1) at the side of the trolley handle (1.2);

11. Trolley according to any one of the previous claims, **characterised by** the fact that the two small end wheels (3.3) are locked so that they do not rotate.

## Patentansprüche

1. Treppenwagen für das Auf- und Abfahren, bestehend aus einem Rahmen mit einem Paar Wagenarme (1), mit Wagengriffen (1.2) und Rädern (2), **dadurch gekennzeichnet, daß**
- dieser eine zweite Achse (3.1) umfasst, parallel zur Achse der Vorschubräder (2.1) und grundsätzlich bestehend aus zwei Paare gegenüberliegenden Armen (3.2), die im wesentlichen die Form eines Tretkurbelpaars besitzen;
- die Tretkurbelachse (3.1) mit einem Untersetzungsgetriebe (3) ausgestattet ist;
- die Enden der genannten Tretkurbeln (3.2) dazu bestimmt sind sich während der Drehung an eine Stufe (S) einzusetzen, die sich neben den genannten Transporträdern befindet (2).

2. Wagen gemäß Anspruch 1, **dadurch gekennzeichnet, daß** das Untersetzungsgetriebe (3) des genannten Tretkurbels (3.1) derart entworfen wurde, daß ein elektrisches Gerät mittels abnehmbarer Kupplung (3.4) installiert werden kann.

3. Wagen gemäß Anspruch 1 und/oder 2, **dadurch gekennzeichnet, daß** das Ende des genannten Tretkurbels (3.2) mit kleinen Rädern (3.3) ausgestattet ist.

4. Wagen gemäß Anspruch 3, **dadurch gekennzeichnet, daß** die genannten kleinen Räder (3.3) am Ende der genannten Tretkurbeln (3.2) gegenüberliegend angeordnet sind.

5. Wagen gemäß einen jeglichen der vorher genannten Ansprüche, **dadurch gekennzeichnet, daß** die genannten Tretkurbeln (3.2) zwei verlängerbare Armpaare bilden, die radial gegenüberliegen, die gleich und symmetrisch auf eine und auf die andere Seite des Wagens angeordnet sind um somit eine Stützstabilität zu bieten

6. Wagen gemäß einen jeglichen der vorher genannten Ansprüche, **dadurch gekennzeichnet, daß** der Wagen aus Stütz- und Kupplungsmitteln besteht, um ein elektrisches Werkzeug zu montieren und zu demontieren, das ein Drehmittel (5) sowie Kupplungsmitteln des genannten Drehmittels an das Untersetzungsgetriebe (3) bieten kann, da auch ein Anschlussmittel vorgesehen ist sowie ein Steuermittel des genannten Drehmittels des Werkzeugs um es an einen Wagengriff (6, 6.1) zu befördern.

7. Wagen gemäß Anspruch (6), **dadurch gekennzeichnet, daß** das genannte Anschlussmittel an die Drehsteuerung des Werkzeugs zum genannten Wagengriff ein flexibles Mittel ist (6).

8. Wagen gemäß einen jeglichen der vorher genannten Ansprüche 6-7, **dadurch gekennzeichnet, daß** die genannten Stütz- und Anschlussmittel einstellbar sind und in eine Position versperrt werden können (4) (4.1, 4.2, 4.21).

9. Wagen gemäß dem vorher genannten Anspruch, **dadurch gekennzeichnet, daß** die genannten Stütz- und Anschlussmittel aus einem Querstab (4) mit Gleitmuffen (4.2) bestehen, die entlang des Armpaars (1.1) des genannten Wagens versperrt werden können.

10. Wagen gemäß dem vorher genannten Anspruch, **dadurch gekennzeichnet, daß** der genannte Querstab (4) mit einer Längsnut versehen ist für die Querbewegung (4.1) eines Befestigungsmittels des genannten Werkzeugs (5) sowie mit einstellbaren Nut-Anschlussmitteln (4.21) für das Einhaken des entsprechenden Steuerauslösers des genannten Werkzeugs (5) für das biegbare Kabel (6) an einen Steuerhebel (6.1) seitlich eines Griffs (1.2) des Wagens.

11. Wagen gemäß einen jeglichen der vorher genannten Ansprüche, **dadurch gekennzeichnet, daß** die genannten kleinen Endräder (3.3) nützlich blockiert sind, damit sie sich nicht drehen.

## Revendications

1. Chariot de montée/descente escaliers, consistant en un châssis équipé d'une paire de bras de chariot (1), de manivelles de chariot (1.2) et de roues (2), **caractérisé par le fait que** :
- il comprend un axe additionnel (3.1) parallèle à l'axe des roues de translation (2.1) et consistant essentiellement en deux paires de bras opposés (3.2) ressemblant substantiellement à une paire de manivelles:
- l'axe à manivelles (3.1) est équipé d'un réducteur de vitesse (3);
- les extrémités de ces manivelles (3.2) sont conçues pour s'engager par rotation sur une marche (S) adjacente aux roues (2).

2. Chariot selon la revendication 1, **caractérisé par le fait que** le réducteur de vitesse (3) de l'axe à manivelles (3.1) est réalisé de manière à ce qu'un outil électrique puisse être installé au moyen d'un embrayage démontable (3.4).

3. Chariot selon la revendication 1 et/ou 2, **caractérisé par le fait que** les extrémités de ces manivelles (3.2) sont équipées de petites roues (3.3).

4. Chariot selon la revendication 3, **caractérisé par le fait que** les petites roues d'extrémité (3.3) des manivelles (3.2) sont opposées.

5. Chariot selon l'une des revendications susmentionnées, **caractérisé par le fait que** ces manivelles (3.2) forment deux paires de bras d'extension radialement opposés, identiques et symétriques situés de chaque côté du chariot pour qu'il soit stable.

6. Chariot selon l'une des revendications susmentionnées, **caractérisé par le fait qu'**il est constitué de moyens de support et d'accouplement pour le montage et le démontage d'un équipement éclectique pouvant fournir un moyen de rotation (5) et pour l'accouplement de ce moyen de rotation au réducteur de vitesse (3), en considérant qu'il y a également un moyen de connexion et de contrôle de ce moyen de rotation de l'outil pour le transporter à l'une des poignées du chariot (6, 6.1).

7. Chariot selon la revendication (6), **caractérisé par le fait que** ce moyen de connexion de l'actionnement de rotation de l'outil à la poignée du chariot est flexible (6).

8. Chariot selon l'une des revendications 6-7 susmentionnées, **caractérisé par le fait que** les moyens de support et de connexion sont réglables et peuvent être fixés en position (4) (4.1, 4.2, 4.21).

9. Chariot selon la revendication précédente, **caractérisé par le fait que** ces moyens de support et d'accouplement consistent en une barre transversale (4) coulissante à manchon (4.2) pouvant être verrouillée le long de la paire de bras (1.1) du chariot susmentionné.

10. Chariot selon la revendication précédente, **caractérisé par le fait que** la barre transversale (4) présente une fente longitudinale pour le mouvement transversal (4.1) d'un outil de fixation de ce moyen (5) et des moyens d'accouplement réglables à fente (4.21) pour le verrouillage du déclencheur correspondant de ce moyen (5) pour le renvoi du câble flexible (6) à un levier (6.1) associé à une poignée du chariot (1.2);

11. Chariot selon l'une des revendications précédentes, **caractérisé par le fait que** les deux roues d'extrémité (3.3) sont verrouillées de manière à ne pas tourner.
